# EUROPÄISCHE PATENTSCHRIFT

(11) **EP 1 363 829 B1**
(45) Veröffentlichungstag und Bekanntmachung des Hinweises auf die Patenterteilung: **30.05.2007**
(21) Anmeldenummer: 02716738.6
(22) Anmeldetag: 07.02.2002
(51) Int. Cl.: B62D 25/08

(54) **ECKBEREICH ZWISCHEN SEITLICHEM UND HINTEREM DACHRAHMEN EINES KRAFTFAHRZEUGES MIT RÜCKWANDTÜR UND EIN VERFAHREN ZU DESSEN HERSTELLUNG**
CORNER REGION BETWEEN LATERAL AND REAR ROOF FRAMES ON A MOTOR VEHICLE WITH A HATCHBACK DOOR AND METHOD FOR PRODUCTION THEREOF
ZONE D'ANGLE ENTRE UNE BAIE LATERALE ET UNE BAIE ARRIERE D'UN VEHICULE AUTOMOBILE A HAYON ET PROCEDE DE FABRICATION

(30) Priorität: 02.03.2001 DE 10110056
(43) Veröffentlichungstag der Anmeldung: 26.11.2003
(73) Patentinhaber: DaimlerChrysler AG, 70327 Stuttgart (DE)
(72) Erfinder: RÖHL, Wolfgang, 71032 Boeblingen (DE)
(86) Internationale Anmeldenummer: PCT/EP2002/001265
(87) Internationale Veröffentlichungsnummer: WO 2002/070326

(56) Entgegenhaltungen:
- DE-A- 19 653 509
- PATENT ABSTRACTS OF JAPAN vol. 2000, no. 02, 29. Februar 2000 (2000-02-29) & JP 11 321706 A (NISSAN MOTOR CO LTD), 24. November 1999 (1999-11-24)
- PATENT ABSTRACTS OF JAPAN vol. 1999, no. 03, 31. März 1999 (1999-03-31) & JP 10 316021 A (NISSAN SHATAI CO LTD), 2. Dezember 1998 (1998-12-02)

## Beschreibung

Die Erfindung betrifft eine Fahrzeugkarosserie mit Eckbereich zwischen seitlichem und hinterem Dachrahmen eines Kraftfahrzeuges mit Rückwandtür und ein Verfahren zu deren Herstellung.

Bei herkömmlichen Kraftfahrzeugen mit Rückwandtür werden im Rohbau viele Bleche verwendet, um dem Eckbereich zwischen dem seitlichen und dem hinteren Dachrahmen die erforderliche Steifigkeit und Festigkeit zu verleihen, da der aus Blechschalen des seitlichen Dachrahmens bestehende Eckbereich zum Fahrzeugheck hin zur Aufnahme eines Scharnieres für die Rückwandtür offen und somit geschwächt ist. Hierbei muß in sehr aufwendiger Weise mit Nahtabdichtmaterial gearbeitet werden, um zu verhindern, daß in die Scharnieröffnung dringendes Wasser in das Fahrzeuginnere und den restlichen Rohbau gelangen kann.

Aus der JP 11 321 706 A ist eine Fahrzeugkarosserie mit einem Eckbereich zwischen seitlichem und hinterem Dachrahmen eines Kraftfahrzeuges bekannt, welche diesen Dachrahmen sowie eine D-Säule beinhaltet. Der Eckbereich wird durch schalenförmige Bauteile im Bereich der D-Säule gebildet.

Der Erfindung liegt die Aufgabe zugrunde, einen Eckbereich zwischen seitlichem und hinterem Dachrahmen eines Kraftfahrzeuges mit Rückwandtür und ein Verfahren zu dessen Herstellung dahingehend weiterzubilden, daß in einfacher Weise die Aufnahme von auf den Rohbau im Dachbereich wirkenden mechanischen Kräften verbessert wird.

Die Aufgabe ist erfindungsgemäß durch die Merkmale des Anspruches 1 hinsichtlich des Eckbereiches und durch die Merkmale des Anspruches 10 hinsichtlich des Herstellungsverfahrens gelöst.

Aufgrund der Tatsache, dass für den Eckbereich ein Verzweigungsstück aus einem Hohlprofil verwendet wird, ist für diesen Bereich eine hohe Steifigkeit und Festigkeit gegeben. Dies umso mehr, als dass es sich bei dem Hohlprofil um ein einstückiges Bauteil handelt, das aus einem rohrförmigen Rohling ausgeformt wird. Durch die besagte Einstückigkeit wird der Rohbau an dieser Stelle konstruktiv und fertigungstechnisch sehr stark vereinfacht und die Teilevielfalt drastisch verringert, wobei gleichzeitig von außen angreifende Kräfte, insbesondere bei einem Crash, von dem seitlichen und hinteren Dachrahmen sowie der D-Säule erheblich besser aufgenommen und ohne Spannungsspitzen übertragen werden können. Aufgrund dessen, daß das Hohlprofil in Richtung des Fahrzeugbuges nahtlos geschlossen ist, kann zwar Wasser durch die nach hinten weisende Öffnung in das Hohlprofil eintreten. Eine weitere Durchdringung des Rohbaus und ein Eindringen in den Fahrzeuginnenraum ist jedoch nicht möglich, so dass der einzige Weg des Austritts für das Wasser die Eintrittsöffnung ist. Dadurch wird der Abdichtaufwand, der nun gänzlich auf die Eintrittsöffnung fokussiert wird, erheblich reduziert. Infolge der Innenhochdruckumformtechnik kann das Hohlprofil exakt an die gewünschte bauraumabhängige Form und Querschnitt in verfahrenstechnisch relativ einfacher Weise angepaßt werden.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend näher erläutert; dabei zeigt:
Fig. 1 in einer perspektivischen Darstellung schematisch ein Kraftfahrzeug mit einem erfindungsgemäßen Eckbereich von seitlichem und hinterem Dachrahmen,
Fig. 2 in einer Schnittdarstellung den erfindungsgemäßen Eckbereich aus Fig. 1 abschnittsweise mit seitlichem und hinterem Dachrahmen sowie einer D-Säule,
Fig. 3 in einem seitlichen Längsschnitt den Eckbereich aus Fig. 1 mit innen angeordnetem Scharniersystem.

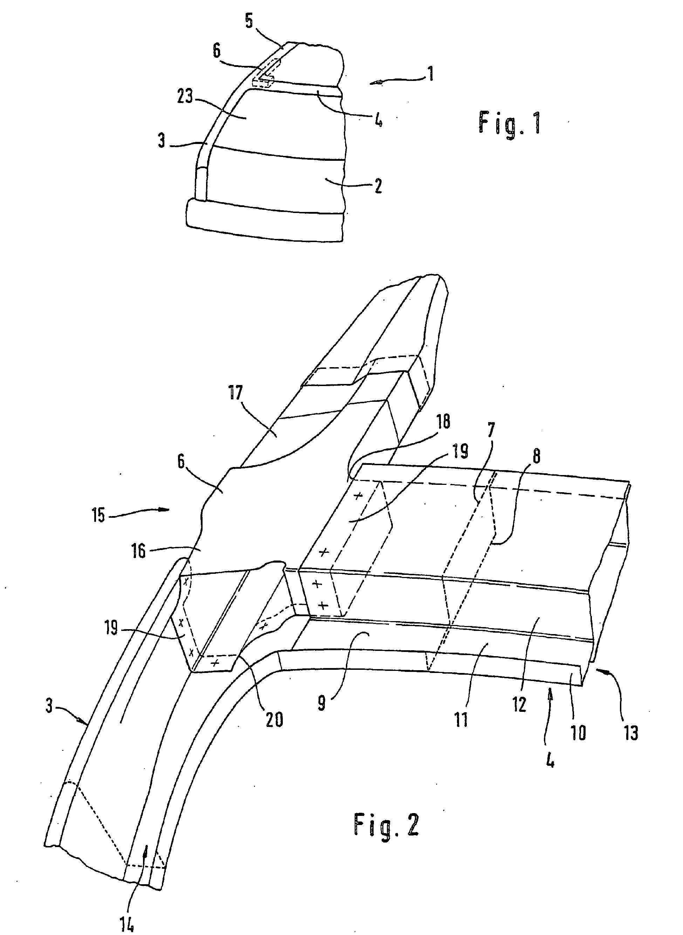

In Fig. 1 ist die Rückseite eines Kraftfahrzeuges 1 dargestellt, dessen Rückwandtür 2 in den von zwei D-Säulen 3 (hier nur die linke gezeigt) und dem hinteren Dachrahmen 4 begrenzten Rahmen eingepaßt ist. An die D-Säule 3 und an den hinteren Dachrahmen 4 schließt sich im Dachbereich zum Fahrzeugbug hin ein seitlicher Dachrahmen 5 an. Sowohl die D-Säule 3 als auch der hintere Dachrahmen 4 und der seitliche Dachrahmen 5 sind miteinander durch ein Verzweigungsstück 6 verbunden, das räumlich den Anschlußbereich einnimmt.

Nach Fig. 2 besteht der hintere Dachrahmen 4 aus zwei schalenförmigen Bauteilen, d.h. einer oberen 7 und einer unteren Halbschale 8 mit stufenförmigem Profil, die miteinander zu einem kastenförmigen Hohlprofil unlösbar verbunden, vorzugsweise verschweißt oder verklebt sind. Die obere Halbschale 7 weist einen zum Fahrzeugheck hin abstehenden Flansch 9 auf, der von deren unteren Stufe gebildet ist und dessen Rand 10 nach oben umgestellt ist. Der unten liegende Abschnitt 11 des Flansches 9 bildet in funktionell günstiger und bauteilsparender Weise mit dem umgestellten Rand 10 und der ebenfalls durch die obere Halbschale gebildete, die beiden Stufen miteinander verbindene Stirnwand 12 eine kanalartige Aufnahme 13 für eine Rahmendichtung aus. Entsprechend ist die D-Säule 3 ausgebildet, deren Aufnahme 14 in die Aufnahme 13 des hinteren Dachrahmens 4 übergeht.

Die Halbschalen 7 und 8 und die D-Säule 3 bilden endseitig gemeinsam mit dem Verzweigungsstück 6 den Eckbereich 15 zwischen seitlichem 5 und hinterem Dachrahmen 4. Das Verzweigungsstück 6 ist als längliches Hohlprofil rechteckigen Querschnitts ausgebildet, das sich mit einem ersten offenen Ende 16 an die D-Säule 3 und mit einer geschlossenen mit dem ersten offenen Ende 16 fluchtenden Aushalsung 17 in Richtung des Fahrzeugbuges an Schalenbauteile des seitlichen Dachrahmens 5 an. Des weiteren besitzt das Verzweigungsstück 6 ein von seinem Längsabschnitt, der sich vom ersten offenen Ende 16 über die Aushalsung 17 hinweg erstreckt, abgewinkeltes zweites Ende 18, das wie das diesem naheliegende erste Ende 16 offen ist und das sich an die Halbschalen 7 und 8 des hinteren Dachrahmens 4 anschließt. Diese überdecken mit ihrem Hohlprofilabschnitt umfänglich das zweite offene Ende 18, während die Schalenbauteile der D-Säule 3 das erste offene Ende 16 und die Schalenbauteile des seitlichen Dachrahmens 5 die Aushalsung 17 des Verzweigungsstücks 6 unter Bildung einer Überlappungszone 19 umfänglich überdeckt. In dieser sind die Bauteile mit dem Verzweigungsstück 6 verbunden, vorzugsweise punktgeschweißt. Zum formgetreuen Übergang der Aufnahme 13 des hinteren Dachrahmens 4 in die Aufnahme 14 der D-Säule 3 weist das erste offene Ende 16 des Verzweigungsstückes eine Ausklinkung 20 auf, die durch einen dreidimensionalen Laserschnitt erzeugt werden kann. Aufgrund der formentsprechenden Anbindung des Verzweigungsstückes 6 an den seitlichen und den hinteren Dachrahmen sowie an die D-Säule 3 kann eine von außen wirkende mechanische Kraft besonders gut in der Rohbaustruktur verteilt werden, so daß eine sehr gute Stoßenergieabsorption erreicht wird.

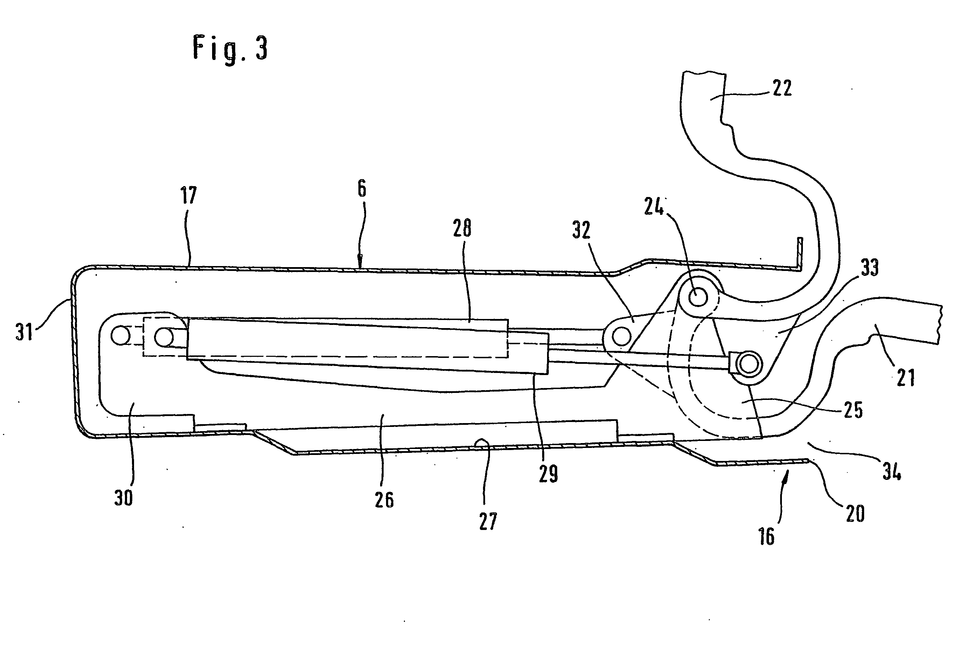

Ein weiterer außerordentlicher Vorteil des erfindungsgemäßen Eckbereiches 15 ist die Verwendung des Verzweigungsstückes 6 als steifes Aufnahmegehäuse für ein Scharniersystem. Das innerhalb des Verzweigungsstückes 6 angeordnete federgedämpfte Scharniersystem besteht hierbei aus einem Scharnier 21 für die Rückwandtür 2 und einem Scharnier 22 für eine klappbare Heckscheibe 23 (Fig.3). Die beiden Scharniere 21 und 22 sind auf der gleichen horizontale Drehachse 24 gelagert, welche an einem Ende 25 eines Lagerbocks 26 gehalten ist, der am Boden 27 des Verzweigungsstückes 6 lösbar befestigt, insbesondere verschraubt ist. Die Verschraubung kann hinsichtlich der Anordnung und Ausbildung der Schraublöcher derart sein, daß der Lagerbock 26 am Boden 27 des Verzweigungsstückes 6 in Längs- und Querrichtung des Fahrzeuges 1 variabel einstellbar ist, wodurch die Lage des Scharniersystems in für die Montage geringaufwendiger und schneller Weise in geschlossenem Zustand der Rückwandtür 2 verstellbar ist. Damit ist in einfacher Weise das Spaltmaß der Schließfuge zwischen Rückwandtür 2 und dem diese fahrzeugseitig umgebenden Rahmen individuell angepaßt an die Fertigungstoleranzen exakt festlegbar, was einer möglichst anhaltend ungehinderten Öffnungs- und Schließbetätigung der Rückwandtür 2 zu Gute kommt. Nicht nur die einfache Verstellbarkeit ist ein Vorteil, der aus der Erfindung erwächst, sondern auch überhaupt der aufgrund der leichten manuellen Zugänglichkeit unbeschwerliche Einbau des Scharniersystem in das Hohlprofil des Verzweigungsstückes 6, wobei das System als auf dem Lagerbock vormontiertes Modul lediglich in das Hohlprofil eingeschoben und angeschraubt werden muß. Dies wirkt sich auch günstig im Reparaturfall aus, wobei dort das jeweilig betroffene Scharnier 21,22 und/oder die Rückwandtür 2 schnell und einfach ausgewechselt werden kann. Des weiteren sind die beiden Scharniere 21 und 22 des Scharniersystems an unterschiedlichen hydraulischen oder pneumatischen Federdämpfungselementen, sogenannten Gasfedern 28 und 29 abgestützt. Diese sind einenends am Ende 30 des Lagerbocks 26, das nahe des geschlossenen Endes 31 der Aushalsung 17 liegt, schwenkbar gelagert und anderenends an einem abragenden Blechlappen 32,33 des jeweils zugeordneten Scharniers 21 bzw. 22 gelenkig befestigt. Durch die Erfindung ergibt sich auch eine einfache fertigungszeitsparende Montage der Gasfedern 28 und 29 am Lagerbock 26, denn, nachdem der Rohbau ohne die Gasfedern 28,29 den Lackierungsvorgang durchlaufen hat, die sonst in der Lackierungswärme Schaden nehmen und funktionsuntüchtig werden würden, müssen diese nachträglich eingebaut werden, was durch Lösen der Schrauben und Herausziehen des Lagerbockes 26 leicht ermöglicht werden kann. Hierbei kommt es zu Lackabrissen an den Stellen der Verschraubungen, die jedoch durch ihre tief im Verzweigungsstück 6 befindlichen Lage in vorteilhafter Weise optisch nicht sichtbar sind. Die Gasfedern 28,29 können auch in das Verzweigungsstück 6 eingeschoben werden und über eine seitliche Öffnung in dem Verzweigungsstück 6, die anschließend mittels eines Gummistopfens wasserdicht verschlossen wird, auf die Kugelkopflagerung gedrückt werden.

Weiterhin ergeben sich Vorteile in der auch hinsichtlich des Aufwandes zur Wasserdichtheit erleichterten Kabelführung elektrischer Versorgungs- und Steuerkabel aus dem hinteren Dachrahmen 4 in das Verzweigungsstück 6, und - aus diesem heraus - über die Scharniere 21 und 22 in die Rückwandtür 2.

Zur Herstellung des Verzweigungsstückes 6 des Eckbereiches 15 wird ein geradliniges Rohr verwendet, das anschließend knieförmig gebogen und dann in eine Profilvorform gequetscht wird, so daß das abgewinkelte Rohr einen rechteckigen Querschnitt erhält. Die Querschnittsform kann auch anders sein und beliebig den jeweiligen Bauraumgegebenheiten und/oder dem jeweiligen Bedarf angepaßt sein. Danach wird die Profilvorform in ein Innenhochdruck-Umformwerkzeug eingelegt und entsprechend der gewünschten Endform mittels fluidischen Innenhochdruckes aufgeweitet. Gleichzeitig wird an der Stelle der knieförmigen Abwinklung die Aushalsung 17 ausgeblasen, die im wesentlichen koaxial zur in Einbaulage zum Fahrzeugheck weisenden Öffnung 34 des Hohlprofiles verläuft und die im weiteren geschlossen bleibt. Hierbei ist es denkbar, den Ausformungsprozeß der Aushalsung 17 in mehreren Stufen abfolgen zu lassen, wobei nach jeder Stufe das Hohlprofil zwischengeglüht wird, um den bei der gegebenen großen Ausziehlänge der Aushalsung 17 bestehenden hohen Umformgrad prozeßsicher zu ermöglichen.

Zur Erstellung des Eckbereiches 15 werden die schalenförmigen Bauteilen 7,8 des hinteren Dachrahmens und der D-Säule 3 des Kraftfahrzeuges 1 an das fertiggeformte Verzweigungsstück 6 gefügt. Dies kann zum einen dadurch erfolgen, daß zuerst die Schalenbauteile 7 und 8 miteinander verschweißt oder miteinander unter Bildung eines kastenförmigen Hohlprofiles geklebt werden, worauf dieses dann in verfahrenstechnisch einfacher Weise auf das offene zweite Ende 18 des Verzweigungsstückes 6 gesteckt wird. In dieser vorläufig festen Verbindung kann dann eine Verschweißung, vorzugsweise Punktschweißungen oder einer Durchschweißung mittels eines hochenergetischen Strahles, mit dem Verzweigungsstück 6 in der Überlappungszone 19 der Steckverbindung erfolgen. Die Halbschale der D-Säule 3 wird auf die Ausklinkung 20 gesteckt und mit dem ersten offenen Ende 16 des Verzweigungsstückes 6 verschweißt. Zum anderen ist es auch denkbar, die Schalenbauteile an den Umfang der Enden 16 und 18 anzulegen, so daß die Überlappungszone 19 entsteht, in der die Fügung dann mittels Schweißen erfolgt. Hierbei kann verfahrensökonomisch in einem Schweißvorgang auch die Verbindung der Schalenbauteile untereinander zu einem Hohlprofil ablaufen. Schließlich wird das federgedämpfte Scharniersystem in die nach zum Fahrzeugheck weisende Öffnung 34 des Verzweigungsstückes 6 geschoben und an dessen Boden 27 lösbar befestigt, insbesondere verschraubt.

## Patentansprüche

1. Fahrzeugkarosserie mit Eckbereich zwischen seitlichem und hinterem Dachrahmen (5, 4) eines Kraftfahrzeuges (1) mit Rückwandtür (2), wobei die Fahrzeugkarosserie einen seitlichen und hinteren Dachrahmen (5, 4) sowie eine D-Säule (3) umfasst, wobei der Eckbereich (15) aus schalenförmigen Bauteilen (7,8) des hinteren Dachrahmens (4) und einer D-Säule (3) des Kraftfahrzeuges (1) sowie einem innenhochdruckumgeformten Hohlprofil gebildet ist, wobei die Bauteile (7,8) sowie die D-säule (3) und das Hohlprofil unlösbar miteinander verbunden sind, und das Hohlprofil als Verzweigungsstück (6) ausgebildet ist, das sich mit einem ersten offenen Ende (16) an die D-Säule (3) und mit einer geschlossenen mit dem ersten offenen Ende (16) fluchtenden Aushalsung (17) an Schalenbauteile des seitlichen Dachrahmens (5) sowie mit einem zweiten offenen von dem Längsabschnitt des Hohlprofiles, der sich vom ersten offenen Ende (16) über die Aushalsung (17) hinweg erstreckt, abgewinkelten Ende (18) an die Bauteile (7,8) des hinteren Dachrahmens (4) anschließt.

2. Fahrzeugkarosserie nach Anspruch 1,
**dadurch gekennzeichnet,**
**daß** eines der Schalenbauteile (7,8) des hinteren Dachrahmens (4) einen zum Fahrzeugheck hin abstehenden Flansch (9) aufweist, dessen Rand (10) nach oben umgestellt ist und der mit dem umgestellten Rand (10) eine kanalartige Aufnahme (13) für eine Dichtung ausbildet.

3. Fahrzeugkarosserie nach einem der Ansprüche 1 oder 2,
**dadurch gekennzeichnet,**
**daß** die schalenförmigen Bauteile (7,8) des hinteren Dachrahmens (4) miteinander zu einem kastenförmigen Hohlprofil verbunden sind.

4. Fahrzeugkarosserie nach einem der Ansprüche 1 bis 4,
**dadurch gekennzeichnet,**
**daß** die schalenförigen Bauteile (7,8) des hinteren Dachrahmens (4) das zweite offene Ende (18), die der D-Säule (3) das erste offene Ende (16) sowie die Schalenbauteile des seitlichen Dachrahmens (5) die Aushalsung (17) des Verzweigungsstücks (6), unter Bildung einer Überlappungszone (19) umfänglich überdecken, in welcher die Bauteile (7,8) mit dem Verzweigungsstück (6) verbunden sind.

5. Fahrzeugkarosserie nach einem der Ansprüche 1 bis 4,
**dadurch gekennzeichnet,**
**daß** innerhalb des Verzweigungsstückes (6) ein federgedämpftes Scharniersystem angeordnet ist, das aus einem Scharnier (21) für die Rückwandtür (2) und einem Scharnier (22) für eine klappbare Heckscheibe (23) besteht.

6. Fahrzeugkarosserie nach Anspruch 5,
**dadurch gekennzeichnet,**
**daß** das Scharniersystem am Boden (27) des Verzweigungsstückes (6) lösbar befestigt, insbesondere verschraubt ist.

7. Fahrzeugkarosserie nach einem der Ansprüche 5 oder 6,
**dadurch gekennzeichnet,**
**daß** das Scharniersystem auf einem Lagerbock (26) gehalten ist, der am Boden (27) des Verzweigungsstückes (6) befestigt ist.

8. Fahrzeugkarosserie nach Anspruch 7,
**dadurch gekennzeichnet,**
**daß** die Lage des Scharniersystems auf dem Lagerbock (26) in Längs- und Querrichtung des Fahrzeuges (1) variabel einstellbar ist.

9. Fahrzeugkarosserie nach einem der Ansprüche 5 bis 8,
**dadurch gekennzeichnet,**
**daß** die beiden Scharniere (21,22) des Scharniersystems an unterschiedlichen hydraulischen oder pneumatischen Federdämpfungselementen (28,29) abgestützt sind.

10. Verfahren zur Herstellung einer Fahrzeugkarosserie mit einem Eckbereich zwischen seitlichem und hinterem Dachrahmen (5, 4) eines Kraftfahrzeuges (1) mit Rückwandtür (2),
- wobei die Fahrzeugkarosserie durch einen seitlichen und hinteren Dachrahmen (5, 4) sowie eine D-Säule (3) gebildet wird,
- wobei der Eckbereich (15) durch Fügen von schalenförmigen Bauteilen (7,8) des hinteren Dachrahmens (4) und einer D-Säule (3) des Kraftfahrzeuges (1) an ein als Hohlprofil ausgebildetes Verzweigungsstück (6) hergestellt wird,
- wobei das Hohlprofil aus einem geradlinigen Rohr geformt wird, das knieförmig gebogen und in eine Profilvorform gequetscht wird, und
- wobei anschließend die Vorform mittels fluidischen Innenhochdruckes in die Endform gebracht wird, wobei an der Stelle der knieförmigen Abwinklung eine geschlossene Aushalsung (17) ausgeformt wird, die im wesentlichen koaxial zur in Einbaulage zum Fahrzeugheck weisenden Öffnung (34) des Hohlprofiles verläuft.

11. Verfahren nach Anspruch 10,
**dadurch gekennzeichnet,**
**daß** die Schalenbauteile (7,8) mit den Enden (16,18) des Hohlprofiles gefügt, vorzugsweise verschweißt werden, wobei die Schalenbauteile (7,8) an den Umfang der Enden (16,18) angelegt werden, so daß eine Überlappungszone (19) entsteht, in der die Fügung erfolgt.

12. Verfahren nach einem der Ansprüche 10 oder 11,
**dadurch gekennzeichnet,**
**daß** die Schalenbauteile (7,8) miteinander zu einem kastenartigen Hohlprofil verbunden sind.

13. Verfahren nach einem der Ansprüche 10 bis 11,
**dadurch gekennzeichnet,**
**daß** in die nach zum Fahrzeugheck weisende Öffnung (34) des Hohlprofiles ein federgedämpftes Scharniersystem mit einem Scharnier (21) für die Rückwandtür (2) und einem Scharnier (22) für eine klappbare Heckscheibe (23) geschoben und am Boden (27) des Hohlprofiles lösbar befestigt, insbesondere verschraubt wird.

## Claims

1. Vehicle body with a corner region between lateral and rear roof frames (5, 4) of a motor vehicle (1) with a hatchback door (2), the vehicle body comprising a lateral and rear roof frame (5, 4) and a D-column, such that the corner region (15) is formed of shell-type components (7, 8) of the rear roof frame (4), a D-column (3) of the motor vehicle (1) and a hollow section shaped by internal high pressure, the components (7, 8) and the D-column (3) and the said hollow section being permanently connected to one another, and the hollow section being formed as a branching component (6) which is joined at a first open end (16) to the D-column (3), at a closed extension (17) aligned with the first open end (16) to shell components of the lateral roof frame (5), and at a second end (18) opening from the longitudinal direction of the hollow section, which extends beyond the extension (17) at an angle, to the components (7, 8) of the rear roof frame (4).

2. Vehicle body according to Claim 1,
**characterised in that**
one of the shell components (7, 8) of the rear roof frame (4) comprises a flange (9) extending towards the rear of the vehicle, whose edge (10) is bent upwards and which, with its upward-reaching edge (10), forms a channel-like lodgement (13) for a seal.

3. Vehicle body according to either of Claims 1 or 2,
**characterised in that**
the shell-type components (7, 8) of the rear roof frame (4) are connected to one another, forming a box-like hollow section.

4. Vehicle body according to any of Claims 1 to 3,
**characterised in that**
the shell-type components (7, 8) of the rear roof frame (4) substantially overlap the second open end (18), the D-column (3) the first open end (16), and the shell components of the lateral roof frame (5) the extension (17) of the branching component (6), to form overlap zones (19) in which the components (7, 8) are connected to the branching component (6).

5. Vehicle body according to any of Claims 1 to 4,
**characterised in that**
inside the branching component (6) is arranged a spring-damped hinge system, which consists of a hinge (21) for the hatchback door (2) and a hinge (22) for a tilting rear window (23).

6. Vehicle body according to Claim 5,
**characterised in that**
the hinge system is fixed detachably to the bottom (27) of the branching component (6), in particular screwed onto it.

7. Vehicle body according to either of Claims 5 or 6,
**characterised in that**
the hinge system is held on a support block (26) which is fixed to the bottom (27) of the branching component (6).

8. Vehicle body according to Claim 7,
**characterised in that**
the position of the hinge system on the support block (26) is variably adjustable in the longitudinal and transverse directions of the vehicle (1).

9. Vehicle body according to any of Claims 5 to 8,
**characterised in that**
the two hinges (21, 22) of the hinge system are supported by different hydraulic or pneumatic spring-damping elements (28, 29).

10. Method for the production of a vehicle body with a corner region between lateral and rear roof frames (5, 4) of a motor vehicle (1) with a hatchback door (2),
- the vehicle body being formed by a lateral and a rear roof frame (5, 4) and a D-column (3),
- the corner region (15) being made by joining shell-type components (7, 8) of the rear roof frame (4) and a D-column (3) of the motor vehicle (1) to a branching component (6) made as a hollow section,
- the hollow section being made from a straight tube which is bent in a knee shape and compressed into a section perform, and
- the perform then being brought to its final shape by means of fluidic internal high pressure, such that at the position of the knee shaped bend a closed extended portion (17) is formed, which extends essentially coaxially with the opening (34) of the hollow section facing towards the rear of the vehicle in its mounted position.

11. Process according to Claim 10,
**characterised in that**
the shell components (7, 8) are joined, preferably by welding, to the ends (16, 18) of the hollow section, the shell components (7, 8) being positioned over the periphery of the ends (16, 18) to form an overlap zone (19) in which the joining is effected.

12. Process according to either of Claims 10 or 11,
**characterised in that**
the shell components (7, 8) are connected to one another to form a box-like hollow section.

13. Process according to any of Claims 10 to 12,
**characterised in that**
into the opening (34) of the hollow section facing towards the rear of the vehicle is pushed a spring-damper hinge system with a hinge (21) for the hatchback door (2) and a hinge 22) for a tilting rear window (23), which is detachably fixed to the bottom (27) of the hollow section, in particular by screwing it on.

## Revendications

1. Carrosserie automobile avec zone d'angle entre cadre de toit latéral et cadre de toit arrière (5, 4) d'un véhicule automobile avec hayon (2), la carrosserie du véhicule comprenant un cadre de toit latéral et un cadre de toit arrière (5, 4) et une colonne D (3), la zone d'angle (15) étant formée de composants (7, 8) en forme de coque du cadre de toit (4) arrière et d'une colonne D (3) du véhicule automobile (1) et d'un profilé creux formé à pression intérieure élevée, les composants (7, 8) ainsi que la colonne D (3) et le profilé creux étant reliés entre eux de façon indétachable, et le profilé creux étant conçu comme une pièce de ramification (6), qui se raccorde par une première extrémité (16) ouverte à la colonne D (3) et par une extrusion (17) fermée, alignée avec la première extrémité (16) ouverte à des composants de coque du cadre de toit (5) latéral et par une seconde extrémité (18) ouverte, coudée à partir de la partie longitudinale du profilé creux, qui s'étend depuis la première extrémité (16) ouverte sur l'extrusion (17), aux composants (7, 8) du cadre de toit (4) arrière.

2. Carrosserie de véhicule selon la revendication 1, **caractérisée en ce que** l'un des composants de coque (7, 8) du cadre de toit arrière (4) présente une bride (9) débordant vers l'arrière du véhicule, dont le bord (10) est déplacé vers le haut et qui forme avec le bord (10) déplacé un logement (13) de type conduit pour un joint.

3. Carrosserie de véhicule selon l'une quelconque des revendications 1 ou 2, **caractérisée en ce que** les composants (7, 8) en forme de coque du cadre de toit (4) arrière sont reliés entre eux pour former un profilé creux en forme de caisson.

4. Carrosserie de véhicule selon l'une quelconque des revendications 1 à 4, **caractérisée en ce que** les composants (7, 8) en forme de coque du cadre de toit (4) arrière recouvrent sur le pourtour la seconde extrémité (18) ouverte, ceux de la colonne D (3) la première extrémité (16) ouverte et les composants en forme de coque du cadre de toit (5) latéral l'extrusion (17) de la pièce de ramification (6), en formant une zone de chevauchement (19), dans laquelle les composants (7, 8) sont reliés à la pièce de ramification (6) .

5. Carrosserie de véhicule selon l'une quelconque des revendications 1 à 4, **caractérisée en ce qu'**à l'intérieur de la pièce de ramification (6) est disposé un système de charnière amorti par ressort, qui se compose d'une charnière (21) pour le hayon (2) et d'une charnière (22) pour une lunette arrière (23) rabattable.

6. Carrosserie de véhicule selon la revendication 5, **caractérisée en ce que** le système de charnière est fixé de façon amovible, en particulier vissé, sur le fond (27) de la pièce de ramification (6).

7. Carrosserie de véhicule selon l'une quelconque des revendications 5 ou 6, **caractérisée en ce que** le système de charnière est maintenu sur un support de palier (26) qui est fixé sur le fond (27) de la pièce de ramification (6).

8. Carrosserie de véhicule selon la revendication 7, **caractérisée en ce que** la position du système de charnière sur le support déployé (26) est réglable de façon variable dans le sens longitudinal et le sens transversal du véhicule (1).

9. Carrosserie selon l'une quelconque des revendications 5 à 8, **caractérisée en ce que** les deux charnières (21, 22) du système de charnière sont soutenues sur différents éléments d'amortissement à ressort (28, 29) hydrauliques ou pneumatiques.

10. Procédé pour la fabrication d'une carrosserie de véhicule avec une zone d'angle entre un cadre de toit latéral et un cadre de toit arrière (5, 4) d'un véhicule automobile (1) avec hayon (2),
> la carrosserie de véhicule étant formée par un cadre de toit latéral et un cadre de toit arrière (5, 4) et une colonne D (3),
> la zone d'angle (15) étant fabriquée par l'assemblage de composants (7, 8) en forme de coques du cadre de toit (4) arrière et d'une colonne D (3) du véhicule (1) sur une pièce de ramification (6) conçue comme profilé creux,
> le profilé creux étant formé à partir d'un tuyau rectiligne, qui est plié en forme de coude et est écrasé dans une préforme de profilé, et
> la préforme étant amenée ensuite à la forme définitive au moyen d'une haute pression intérieure fluidique, une extrusion (17), qui est montée sensiblement de façon coaxiale à l'ouverture (34) dirigée dans la position de montage vers l'arrière du véhicule, du profilé creux, étant formée à la place de la partie pliée en forme de coude.

11. Procédé selon la revendication 10, **caractérisé en ce que** les composants en forme de coque (7, 8) sont assemblées, de préférence soudées avec les extrémités (16, 18) du profilé creux, les composants en forme de coque (7, 8) étant placés sur le pourtour des extrémités (16, 18), de sorte qu'il se forme une zone de chevauchement (19) dans laquelle s'effectue l'assemblage.

12. Procédé selon l'une quelconque des revendications 10 ou 11, **caractérisé en ce que** les composants en forme de coque (7, 8) sont reliés entre eux pour former un profilé creux en forme de caisson.

13. Procédé selon l'une quelconque des revendications 10 à 11, **caractérisé en ce qu'**un système de charnière amorti par ressort avec une charnière (21) pour le hayon (2) et une charnière (22) pour une lunette arrière (23) rabattable est glissé dans l'ouverture (34), dirigée vers l'arrière du véhicule, du profilé creux et est fixé de manière amovible, en particulier vissé, sur le fond (27) du profilé creux.
